# EUROPÄISCHE PATENTANMELDUNG

(11) **EP 4 332 299 A2**
(43) Veröffentlichungstag der Anmeldung: **06.03.2024**
(21) Anmeldenummer: 23193391.2
(22) Anmeldetag: 25.08.2023
(51) Int. Cl.: D21J 3/10

(54) **VORRICHTUNG UND VERFAHREN ZUM HERSTELLEN UND BEHANDELN EINES BEHÄLTERS AUS FASER UMFASSENDEM MATERIAL IN EINER FORM**

(30) Priorität: 25.08.2022 DE 102022121467
(71) Anmelder: Krones AG, 93073 Neutraubling (DE)
(72) Erfinder: Winzinger, Frank, 93073 Neutraubling (DE); Wahl, Matthias, 93073 Neutraubling (DE); Freese, Yvette, 93073 Neutraubling (DE); Hippel, Andreas, 93073 Neutraubling (DE); Zacharias, Joerg, 93073 Neutraubling (DE)
(74) Vertreter: Grünecker Patent- und Rechtsanwälte PartG mbB

(57) **Zusammenfassung**

Vorrichtung zum Herstellen eines Behälters aus einem Faser umfassenden Material und zum Behandeln des Behälters, wobei die Vorrichtung eine Form, eine erste Einrichtung zum Durchführen mindestens eines Herstellungsschritts zum Herstellen des Behälters aus dem Faser umfassenden Material in der Form und eine zweite Einrichtung zum Durchführen mindestens eines Behandlungsschrittes zum Behandeln des Behälters umfasst und wobei die zweite Einrichtung ausgebildet ist, den Behälter in der Form zu behandeln.

## Beschreibung

Die Erfindung bezieht sich auf eine Vorrichtung zum Herstellen und Behandeln eines Behälters aus einem Fasern umfassenden Material in einer Form und auf ein entsprechendes Verfahren gemäß den unabhängigen Patentansprüchen.

### Stand der Technik

Aus dem Stand der Technik ist es bekannt, Behälter aus Fasern umfassendem Material, beispielsweise Pulpe, herzustellen. Hierfür wird eine Suspension aus Fasern umfassendem Material in eine perforierte oder als ein Gitter umfassend ausgebildete Form eingebracht. Durch Beaufschlagen der an der Innenseite der Form anhaftenden Suspension mit einem Überdruck oder durch das Beaufschlagen der Außenseite der Form mit einem Unterdruck, kann eine Fixierung der Fasern an der Innenseite der Form erreicht und der Suspension gleichzeitig die flüssige Phase entzogen werden. Um ein vollständiges Aushärten des Behälters zu erreichen, wird dieser typischerweise zusätzlich mit Wärme beaufschlagt. Anschließend kann die Form geöffnet und der Behälter herausgenommen werden. Der so hergestellte Behälter kann an eine Behandlungsmaschine, welche beispielsweise zum Befüllen oder Verschließen des Behälters ausgebildet ist, übergeben werden.

In der WO2019/034707 wird beispielsweise ein Verfahren zum Herstellen eines Behälters aus Fasern umfassendem Material angegeben. Das Verfahren umfasst das Ausformen eines Behälterrohlings in einer ersten Negativform. Das anschließende Ausformen des Behälterrohlings zu einem Behälter findet in einer zweiten Negativform, welche insbesondere für das Heißpressen ausgebildet ist, statt. Ferner offenbart die Druckschrift, den auf diese Weise hergestellten Behälter an eine weitere Maschine zum Beschichten, Befüllen oder Verschließen zu übergeben.

In der EP 3 642 414 wird wiederum ein Verfahren zum Herstellen von Behältern aus Fasern umfassendem Material offenbart, wobei der Behälter aus einer Pulpemischung in einer Form hergestellt wird. In einem nachgeordneten Behandlungsschritt kann der hergestellte Behälter mit einer Beschichtung überzogen werden.

### Zu lösende technische Aufgabe

Im Hinblick auf den Stand der Technik liegt die zu lösende technische Aufgabe der vorliegenden Erfindung darin, den Herstellungs- und Behandlungsprozess für Behälter aus Fasern umfassendem Material zu vereinfachen.

### Lösung

Die Erfindung sieht zur Lösung dieser Aufgabe eine Vorrichtung zum Herstellen und Behandeln eines Behälters aus einem Fasern umfassenden Material in einer Form gemäß unabhängigem Anspruch 1 und ein entsprechendes Verfahren gemäß unabhängigem Anspruch 8 vor. Bevorzugte Ausführungsformen der Erfindung sind in den abhängigen Ansprüchen ausgeführt.

Die erfindungsgemäße Vorrichtung zum Herstellen eines Behälters aus einem Fasern umfassenden Material und zum Behandeln des Behälters umfasst eine Form, eine erste Einrichtung zum Durchführen mindestens eines Herstellungsschritts zum Herstellen des Behälters aus dem Faser umfassenden Material in der Form und eine zweite Einrichtung zum Durchführen mindestens eines Behandlungsschrittes zum Behandeln des Behälters, wobei die zweite Einrichtung ausgebildet ist, den Behälter in der Form zu behandeln.

Da der Behälter mittels der erfindungsgemäßen Vorrichtung in einer Form hergestellt und behandelt werden kann, ist ein Öffnen der Form, ein Herausnehmen des Behälters aus der Form oder ein Überführen des Behälters in eine andere Form oder eine weitere Vorrichtung zur Behandlung nicht notwendig. Mit der erfindungsgemäßen Vorrichtung lässt sich somit nicht nur der Herstellungs- und Behandlungsprozess zeitlich effizienter gestalten und ein höherer Behälterdurchsatz erzielen, sondern auch eine kompaktere Ausgestaltung der Vorrichtung zum Herstellen und Behandeln von Behältern realisieren, da ein Transport oder eine Übergabe der Form oder des Behälters an zumindest eine weitere Vorrichtung zur Durchführung eines weiteren Prozessschritts nicht notwendig ist.

Unter einem Herstellen eines Behälters kann eine Fertigstellung der endgültigen Form des Behälters verstanden werden, insbesondere ohne Verschluss und Etikett.

Der durch die Vorrichtung hergestellte und behandelte Behälter aus Fasern umfassenden Material ist vorzugsweise als eine in der Getränkeindustrie zum Einsatz kommende Flasche ausgestaltet. Der Behälter ist jedoch nicht auf diese Ausgestaltungsart beschränkt. Vielmehr kann die Vorrichtung auch zum Herstellen und Behandeln von Bechern, Dosen oder Tuben aus Fasern umfassenden Material, wie sie beispielsweise in der Getränke-, Pharma-, Gesundheits- oder Lebensmittelindustrie Anwendung finden, oder eines jeglichen Behälters aus Fasern umfassendem Material, welcher zum Aufnehmen eines flüssigen oder pastösen Mediums geeignet ist, ausgebildet sein.

Das Faser umfassende Material liegt zu Beginn des Herstellungsprozesses typischerweise als Suspension vor, welche neben den Fasern ein Bindemittel und Wasser umfasst. Die Suspension kann beispielsweise einen Wasseranteil von 0,1% bis 99,9% umfassen. Durch Einbringen der Suspension in eine Form und durch das Beaufschlagen der Form mit Wärme und/oder durch das Beaufschlagen der Form mit einem Über- oder Unterdruck, kann das Fasern umfassende Material ausgehärtet und ein Behälter erzeugt werden. Abhängig von der verwendeten Form lassen sich, wie oben beschrieben, Behälter verschiedener Art erzeugen. Das Fasern umfassende Material kann beispielsweise Pulpe, welche auch als Papiermaché bekannt ist, umfassen oder Pulpe sein. Bei den Fasern handelt es sich vorzugsweise um Papierfasern. Es kann sich jedoch auch um jedes andere Fasern umfassende Material, welches zum Herstellen eines Behälters geeignet ist, handeln.

Unter einem Herstellungsschritt ist ein Schritt zu verstehen, welcher mit der Ausformung des Behälters aus der Suspension aus Fasern umfassendem Material und dessen Aushärtung in Verbindung steht. Darunter fällt beispielsweise das Einbringen der Suspension aus Fasern umfassendem Material in die Form und das anschließende Aushärten der Suspension aus Fasern umfassendem Materials in der Form. Jeder weitere Prozessschritt, der nicht mit dem Einbringen der Suspension und deren Aushärtung in Verbindung steht, ist als Behandlungsschritt zu verstehen. Der Behandlungsschritt kann beispielsweise ein Beschichten des Behälters, ein Befüllen des Behälters, ein Sterilisieren oder Reinigen des Behälters, ein Etikettieren und/oder Bedrucken des Behälters und/oder ein Verschließen des Behälters umfassen.

In einer Ausführungsform können die erste und die zweite Einrichtung in einer senkrecht zu einer Längsachse der Form verlaufenden Ebene beweglich sein, um abwechselnd über der Form positioniert werden zu können, um den Herstellungsschritt und den Behandlungsschritt auszuführen zu können. Hierdurch kann eine flexible Ausrichtung der ersten und der zweiten Einrichtung bezüglich der Form erreicht werden und ein Transport oder eine Übergabe der Form von der ersten zur zweiten Einrichtung vermieden werden. Darunter soll auch verstanden werden, wenn lediglich eine Bewegungskomponente senkrecht ist, in anderen Worten sollen auch schräge Bewegungen darunter verstanden werden, beispielsweise in einem Winkel von 45°.

In einer Ausführungsform kann eine Transporteinheit vorgesehen sein, welche die erste und die zweite Einrichtung umfasst, und wobei die Transporteinheit um eine parallel zu der Längsachse verlaufenden Achse rotiert werden kann und/oder wobei die Transporteinheit entlang einer nicht parallel zu der Längsachse verlaufenden Achse verschoben werden kann, um abwechselnd über der Form positioniert werden zu können, um den Herstellungsschritt und den Behandlungsschritt ausführen zu können. In der ersten der beiden Ausführungsformen kann die Transporteinheit beispielsweise als ein um eine Rotationsachse drehbar ausgestalteter Revolverkopf ausgebildet sein. Durch Rotation des Revolverkopfes kann die erste oder die zweite Einrichtung über der Form platziert werden, wobei der Platzbedarf für die Bereitstellung der ersten und zweiten Einrichtung reduziert wird. Die zweite Ausführungsform erlaubt dagegen ein flexibles Positionieren der ersten und der zweiten Einrichtung auf konstruktiv einfache Weise, insbesondere ohne Drehverteiler im Bereich der Form.

In einer Ausführungsform kann die erste Einrichtung eine erste Komponente zum Ausbringen einer Suspension aus Fasern umfassendem Material in die Form und eine zweite Komponente zum Aushärten der in die Form eingebrachten Suspension aus Fasern umfassendem Materials umfassen. Einbringen der Suspension und Aushärten des Behälters können so in derselben Form ausgeführt werden.

In einer Ausführungsform sind die erste und die zweite Einrichtung voneinander unabhängig bewegbar, insbesondere durch separate Antriebe, insbesondere Motoren.

In einer Ausführungsform wird zumindest eine Einrichtung von einem Roboterarm bewegt.

In einer Ausführungsform kann die erste Komponente eine Düse zum Ausbringen der Suspension aus Fasern umfassendem Material in die Form umfassen und/oder die zweite Komponente zum Aushärten der Suspension aus Fasern umfassendem Material kann eine erste Unterkomponente zum Beaufschlagen mit UV-, Infrarot-, Elektronenstrahlung, magnetischen Wechselfeldern und/oder einem Plasma umfassen, wobei die erste Unterkomponente ausgebildet sein kann, das Innere der Form mit einem Überdruck zu beaufschlagen. Durch das Ausbringen der Suspension des Fasern umfassenden Materials mittels einer Düse kann ein gleichmäßiges Ausbringen der Suspension erreicht werden. Die Behandlung mit UV-, Infrarot-, Elektronenstrahlung, magnetischer Wechselfelder und/oder einem Plasma ist nicht nur energiesparender als eine Aushärtung mittels Heißluft, sondern verhindert auch ein Schrumpfen des Behälters während des Aushärtungsprozesses. Zudem können Keime, welche sich unter Umständen im Inneren des Behälters befinden, effizient abgetötet werden. Das Beaufschlagen des Inneren der Form mit einem Überdruck sorgt für eine sichere Fixierung der Suspension aus Fasern umfassenden Material an der Wandung der Form und wirkt sich zudem vorteilhaft auf den Aushärtungsprozess aus, da mittels des Überdrucks die flüssige Phase der Suspension aus der Form herausgepresst werden kann.

In einer Ausführungsform kann die Form eine Öffnung umfassen und die Düse und die erste Unterkomponente ausgebildet sein, durch die Öffnung in das Innere der Form geführt zu werden. Durch die Einfuhr der Düse und der ersten Unterkomponente in das Innere der Form, kann eine gleichmäßige Verteilung und Aushärtung der Suspension aus Fasern umfassendem Material im Inneren der Form erreicht werden. Somit lassen sich qualitativ hochwertige Behälter mit einer gleichmäßigen Wanddickenverteilung erzeugen.

In einer Ausführungsform kann die zweite Komponente eine Blase oder eine Preform umfassen, welche in das Innere der Form eingeführt werden kann und zum Aushärten der in die Form eingebrachten Suspension mit einem Überdruck beaufschlagt werden kann. Durch das Beaufschlagen der Blase oder der Preform in der Form mit einem Überdruck kann eine in der Suspension aus Fasern umfassendem Material enthaltenen flüssige Phase besonders effizient abgeführt und das Fasern umfassende Material zu einem Behälter ausgepresst werden.

In einer Ausführungsform kann der durch die erste Einrichtung hergestellte Behälter mittels der in das Innere des Behälters eingeführten Blase oder Preform von der ersten Einrichtung an die zweite Einrichtung übergeben werden. Dies ermöglicht ein besonders schonendes Greifen und Übergeben der hergestellten Behälter, wodurch Beschädigungen an den Behältern vermieden werden können. Ferner wird ein Dorn oder eine entsprechende Vorrichtung zum Greifen und Übergeben der Behälter nicht benötigt.

In einer Ausführungsform kann die zweite Einrichtung zum Durchführen mindestens eines Behandlungsschrittes eine dritte Komponente zum Beaufschlagen des Behälters mit einer Beschichtung, eine vierte Komponente zum Befüllen des Behälters mit einer Flüssigkeit, eine fünfte Komponente zum Etikettieren des Behälters und/oder eine sechste Komponente zum Verschließen des Behälters umfassen. Optional kann die zweite Einrichtung eine siebte Komponente zum Sterilisieren und/oder Reinigen des Behälters und/oder eine achte Komponente zum Beaufschlagen des Behälters mit einer zweiten Beschichtung umfassen.

Die Beschichtung kann beispielsweise die Barriereeigenschaften des Behälters gegenüber Wasser und/oder Ölen beeinflussen, so dass ein Aufweichen des Behälters durch das Produkt vermieden werden kann. Die Beschichtung kann beispielsweise Polyethylen sein oder Polyethylen umfassen. Die zweite Beschichtung kann beispielsweise Silizium umfassen und eine Barriere gegen Austritt von Kohlendioxid bzw. Eintritt von Sauerstoff darstellen.

Beide Beschichtungen können eine Innenbeschichtung sein.

Alternativ kann eine Beschichtung eine Innen- und die andere eine Außenbeschichtung des Behälters sein.

Zwei Komponenten bzw. zwei Einrichtungen können in einer Ausführungsform koaxial zueinander angeordnet sein, so dass keine Bewegung mit einer horizontalen Komponente (=horizontaler Anteil des Bewegungsvektors) senkrecht zur Formlängsachse zum Wechsel zwischen Herstellen und Behandeln notwendig ist.

In einer Ausführungsform sind eine Vielzahl von Formen auf einem rotierenden Rad entlang dessen Umfang angeordnet. Das Rad kann sich taktweise oder kontinuierlich bewegen.

Das Etikett kann beispielsweise ein permeables Etikett sein, so dass die flüssige Phase der Suspension aus Fasern umfassendem Material während dem Austrocknungsprozess durch das permeable Etikett hindurch aus der Form herausgeführt werden kann. Da die zweite Einrichtung ausgebildet sein kann, verschiedene Behandlungsschritte auszuführen, sind weitere Einrichtungen zur Behandlung prinzipiell nicht notwendig, was eine platzsparende Ausgestaltung der Vorrichtung zum Herstellen und Behandeln ermöglicht.

Die Vorrichtung kann ein Mischbehältnis zum Mischen von Fasern mit anderen Bestandteilen, insbesondere einer Flüssigkeit, insbesondere Wasser, umfassen, und insbesondere eine Zuführleitung von dem Mischgefäß zu der Form bzw. zu der ersten Einrichtung. Entlang der Zuführleitung kann eine Pumpe angeordnet sein.

Die Vorrichtung kann weiterhin einen Füller zum Abfüllen eines Getränks in den Behälter umfassen, wenn dieser nicht schon in der zweiten Einrichtung integriert ist.

Die Vorrichtung kann eine Etikettiermaschine zum Etikettieren des Behälters mit einem Etikett und/oder einen Drucker zum Bedrucken des Behälters mit Tinte oder Farbe oder dgl. umfassen, wenn diese nicht schon in der zweiten Einrichtung integriert ist.

Die Vorrichtung kann weiterhin einen Packer zum Verpacken des Behälters mit weiteren Behältern umfassen.

Die Vorrichtung kann weiterhin einen Palettierer zum Palettieren von Behältern oder von den Packs umfassen.

Die Vorrichtung kann ein Transportsystem umfassen, welches die Behälter von der Form zu einem oder mehreren der genannten Füller, Etikettiermaschine, Packer und/oder Palettierer transportieren kann. Das Transportsystem kann Förderbänder und/oder Greifer, insbesondere drehende Transportsterne mit Greifern, umfassen.

Das erfindungsgemäße Verfahren zum Herstellen eines Behälters aus einem Fasern umfassenden Material in einer Form und zum Behandeln des Behälters umfasst mindestens einen durch eine erste Einrichtung ausgeführten Herstellungsschritt und mindestens einen durch eine zweite Einrichtung ausgeführten Behandlungsschritt, wobei sich der Behälter bei Durchführung des Behandlungsschrittes in der Form befindet. Da der Behälter zum Durchführen der Behandlungsschritte nicht aus der Form entfernt werden muss, können durch das Verfahren Behälter in kürzerer Zeit hergestellt und behandelt werden und ein hoher Behälterdurchsatz erzielt werden.

In einer Ausführungsform des Verfahrens wird die erste und die zweite Einrichtung in einer senkrecht zu einer Längsachse der Form verlaufenden Ebene bewegt, um abwechselnd über der Form positioniert zu werden, um den Herstellungsschritt und den Behandlungsschritt auszuführen. Dies erlaubt eine flexible Platzierung der ersten und der zweiten Einrichtung über der Form.

In einer Ausführungsform des Verfahrens kann eine Transporteinheit vorgesehen sein, die die erste und die zweite Einrichtung umfasst und wobei die Transporteinheit um eine parallel zu der Längsachse der Form verlaufenden Achse rotiert wird und/oder wobei die Transporteinheit entlang einer nicht parallel zu der Längsachse der Form verlaufenden Achse bewegt wird, um die erste Einrichtung und die zweite Einreichung abwechselnd über der Form zu positionieren, um den Herstellungsschritt und den Behandlungsschritt auszuführen. Durch die so erreichten möglichst kurzen Verfahrwege kann eine effiziente Platzierung der ersten und der zweiten Einrichtung über der Form erreicht und der erzielte Behälterdurchsatz gesteigert werden.

In einer Ausführungsform des Verfahrens umfasst der Herstellungsschritt ein Ausbringen einer Suspension aus Fasern umfassendem Materials in die Form mittels einer ersten Komponente der ersten Einrichtung und ein Aushärten der Suspension aus Fasern umfassendem Material in der Form mittels einer zweiten Komponente der ersten Einrichtung. Ein Herausnehmen des Behälters aus der Form und das Zuführen zu einer Trocknungseinrichtung können so unterbleiben, was sich günstig auf die Qualität des Behälters auswirkt.

In einer Ausführungsform des Verfahrens wird zum Ausbringen der Suspension aus Fasern umfassendem Materials eine Düse durch eine Öffnung der Form in das Innere der Form geführt und zum Aushärten der Suspension aus Fasern umfassendem Material eine erste Unterkomponente der ersten Einrichtung zum Beaufschlagen mit UV-, Infrarot-, Elektronenstrahlung, magnetischen Wechselfeldern und/oder einem Plasma durch die Öffnung in das Innere der Form geführt, wobei das Innere der Form durch die erste Unterkomponente mit einem Überdruck beaufschlagt wird. Durch das Ausbringen mittels einer Düse kann eine gleichmäßige Verteilung der Suspension aus Fasern umfassendem Material im Inneren der Form erreicht werden. Durch das Beaufschlagen mit UV-Infrarot-, Elektronenstrahlung, magnetischen Wechselfeldern und/oder einem Plasma, kann ein gleichmäßiges Aushärten der Suspension erzielt und ein Schrumpfen des Behälters während des Aushärtungsprozesses vermieden werden. Das Beaufschlagen des Inneren mit einem Überdruck sorgt für eine Fixierung der Suspension an der Innenseite der Form und unterstützt den Aushärtungsprozess, da die flüssige Phase aus der Suspension aus Fasern umfassendem Material herausgepresst wird.

In einer Ausführungsform des Verfahrens wird die erste Unterkomponente basierend auf einer Geometrie des Behälters und/oder auf einer Verteilung der Suspension aus Fasern umfassenden Materials in der Form verfahren. Durch das gezielte Verfahren der ersten Unterkomponente in der Form kann ein noch gleichmäßigeres Aushärten der Suspension aus Fasern umfassendem Material erreicht werden, wodurch die Qualität der hergestellten Behälter erhöht werden kann.

In einer Ausführungsform des Verfahrens umfasst die zweite Komponente eine Blase oder eine Preform, welche in das Innere der Form eingeführt und zum Aushärten der in die Form eingebrachten Suspension mit einem Überdruck beaufschlagt wird. Durch das Beaufschlagen der Blase oder der Preform in der Form mit einem Überdruck kann eine in der Suspension aus Fasern umfassendem Material enthaltenen flüssige Phase besonders effizient abgeführt und das Fasern umfassende Material zu einem Behälter ausgepresst werden.

In einer Ausführungsform des Verfahrens wird der durch die erste Einrichtung hergestellte Behälter mittels der in das Innere des Behälters eingeführten Blase oder Preform von der ersten Einrichtung an die zweite Einrichtung übergeben. Dies ermöglicht ein besonders schonendes Greifen und Übergeben der hergestellten Behälter, wodurch Beschädigungen an den Behältern vermieden werden können. Ferner wird ein Dorn oder eine entsprechende Vorrichtung zum Greifen und Übergeben der Behälter nicht benötigt.

In einer Ausführungsform des Verfahrens umfasst der Behandlungsschritt ein Beschichten des Behälters durch eine dritte Komponente der zweiten Einrichtung und/oder ein Befüllen des Behälters mit einer Flüssigkeit durch eine vierte Komponente der zweiten Einrichtung und/oder ein Etikettieren des Behälters durch eine fünfte Komponente der zweiten Einrichtung und/oder ein Verschließen des Behälters durch eine sechste Komponente der zweiten Einrichtung. Durch das Aufbringen einer Beschichtung kann eine Barriere zwischen Behälter aus Fasern umfassendem Material und einem sich in dem Behälter befindlichen Produkt geschaffen werden. Durch die Barriere kann ein Aufweichen des ausgehärtete Fasern umfassenden Materials des Behälters durch das Produkt vermieden werden.

In einer Ausführungsform wird zum Verschließen des Behälters eine Behälteröffnung mit einem ersten Deckel aus ausgehärtetem Fasern umfassenden Material verschlossen und anschließend zum Versiegeln der Behälteröffnung ein zweiter Deckel aus noch nicht ausgehärtetem Fasern umfassenden Material mittels eines Presswerkzeugs auf den ersten Deckel gepresst. Dieser zweistufige Prozess erlaubt ein sichereres Verschließen der Behälteröffnung, ohne dass noch nicht ausgehärtetes Fasern umfassendes Material in den mit dem Produkt befüllten Behälter gelangt.

In einer Ausführungsform können bestimmte Behandlungsschritte zumindest zeitweise gleichzeitig erfolgen, z.B. eine Beschichtung und ein Trocknen.

Es ist ebenfalls daran gedacht, einen Behandlungsschritt zumindest zeitweise parallel oder gleichzeitig zur bzw. mit einem Herstellungsschritt ablaufen zu lassen. so kann beispielsweise ein schon fertig ausgeformter Bodenbereich bereits beschichtet und/oder getrocknet werden, während der obere Teil des Behälters noch geformt (hergestellt) wird.

### Kurze Beschreibung der Figuren

- Figur 1:: Schematische Seitenansicht einer Vorrichtung zum Herstellen und Behandeln eines Behälters aus Faser umfassenden Material gemäß einer Ausführungsform.
- Figur 2a und b:: Schematische Draufsicht auf eine Transporteinheit für die erste und zweite Einrichtung gemäß verschiedener Ausführungsformen.
- Figuren 3a - f:: Schematische Darstellung des Herstellungsprozesses eines Behälters aus Fasern umfassendem Material gemäß einer Ausführungsform

### Ausführliche Beschreibung der Figuren

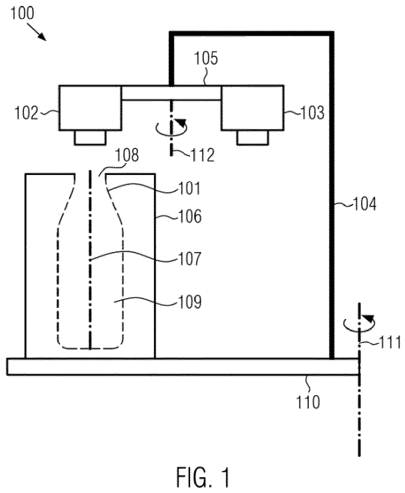

Figur 1 zeigt eine Vorrichtung 100 zum Herstellen und Behandeln eines Behälters aus Fasern umfassendem Material in einer Form 106 gemäß einer Ausführungsform. Erfindungsgemäß umfasst die Vorrichtung 100 eine erste Einrichtung 102 zum Durchführen eines Herstellungsschritts zum Herstellen des Behälters aus Fasern umfassendem Material und eine zweite Einrichtung 103 zum Behandeln des Behälters. Dabei ist die zweite Einrichtung 103 zur Durchführung wenigstens eines Behandlungsschritts an dem Behälter ausgebildet. Die Vorrichtung umfasst des Weiteren eine Form 106, in welcher der Behälter zumindest teilweise mittels der ersten Einrichtung hergestellt und zumindest teilweise mittels der zweiten Einrichtung behandelt werden kann.

Dabei ist es besonders bevorzugt, wenn die gesamte Herstellung umfassend alle Herstellungsschritte und die gesamte Behandlung umfassend alle Behandlungsschritte durch die erste und zweite Einrichtung an dem Behälter durchgeführt werden können, während sich der Behälter in der Form 106 befindet bzw. in ihr hergestellt wird.

Unter einem Herstellungsschritt ist ein Prozessschritt zu verstehen, welche mit der Ausformung des Behälters aus einer Suspension aus Fasern umfassenden Material und deren Aushärtung in Verbindung steht. Darunter fällt beispielsweise das Einbringen der Suspension aus Fasern umfassendem Material durch eine Öffnung 108 in das Innere 109 der Form 106 und deren Aushärten in der Form 106. Jeder weitere Prozessschritt, der nicht mit dem Einbringen der Suspension aus Fasern umfassendem Material und deren Aushärten in Verbindung steht, ist als Behandlungsschritt zu verstehen. Der Behandlungsschritt kann beispielsweise ein Beschichten des Behälters, ein Befüllen des Behälters, ein Etikettieren des Behälters und/oder ein Verschließen des Behälters umfassen.

Zum Transport der Form 106 durch die Vorrichtung 100 kann beispielsweise eine als Karussell ausgebildete Transportvorrichtung 110 vorgesehen sein, wobei das Karussell um eine Rotationsachse 111 gedreht werden kann. Da Herstellung und Behandlung des Behälters in der gleichen Form 106 durchgeführt werden können, ist eine Übergabe der Form 106 oder des Behälters zwischen mehreren Karussellen, welche verschiedene Herstellungs- oder Behandlungsstationen zur Durchführung der verschiedenen Herstellungs- und Behandlungsschritte umfassen, nicht notwendig. Folglich kann die Anzahl notwendiger Karusselle beziehungsweise separater, in Transportrichtung nacheinander angeordneter Herstellungs- und Behandlungsstationen signifikant reduziert werden, wodurch die Vorrichtung kompakter ausgestaltet werden kann. Alternativ kann auch eine linear arbeitende Transportvorrichtung für den Transport der Form 106 oder des Behälters durch die Vorrichtung 100 vorgesehen sein. Auch im Falle einer linear arbeitenden Transportvorrichtung kann eine kompaktere Ausgestaltung der Vorrichtung erreicht werden, da eine Übergabe der Form oder des Behälters an verschiedene entlang einer Transportrichtung der Transportvorrichtung angeordnete Herstellungs- und Behandlungsstationen nicht notwendig ist.

Die Form 106, in welcher der Behälter hergestellt und behandelt wird, umfasst eine Öffnung 108. Durch die Öffnung 108 können beispielsweise die erste Einrichtung 102 und die zweite Einrichtung 103 oder zumindest eine oder mehrere Komponenten dieser Einrichtungen in das Innere 109 der Form 106 eingeführt werden, um einen Herstellungsschritt oder einen Behandlungsschritt durchzuführen. Die Form 106 kann mittels eines generativen Verfahrens hergestellt sein. Die Form 106 kann ein Metall, vorzugsweise einen ferromagnetischen Edelstahl oder einen beschichteten Stahl, oder jedes andere Material, wie beispielsweise einen Kunststoff, umfassen Die Form 106 kann teilbar ausgestaltet sein, so dass die Form 106 am Ende des Herstellungs- und Behandlungsprozesses geöffnet und der Behälter aus der Form 106 entnommen werden kann. Die Form kann einen Hohlraum 109 zur Ausformung des Behälters umfassen, wobei die Wandung 101 des Hohlraums 109 zumindest teilweise perforiert sein oder ein Gitter umfassen kann. Bei Beaufschlagen der zumindest teilweise perforierten oder als Gitter ausgestalteten Wandung 101 des Hohlraums 109 von außen mit einem Unterdruck oder von innen mit einem Überdruck, kann die in den Hohlraum 109 der Form 106 eingebrachte Suspension aus Fasern umfassendem Material an der Wandung 101 der Form 106 fixiert werden und der Aushärtungsprozess der Suspension durch Entzug der flüssigen Phase unterstützt werden. Beispielsweise kann es vorgesehen sein, die zumindest teilweise perforierte oder als Gitter ausgestaltete Wandung von außen mit einem Unterdruck von 0,1 Bar, 0,01 Bar oder 0,001 Bar oder den Hohlraum 109 mit einem Überdruck von 2 Bar, 5 Bar oder 10 Bar bezüglich eines vorherrschenden Umgebungsdruckes zu beaufschlagen. Das Anlegen eines niedrigeren Unterdrucks beziehungsweise eines höheren Überdrucks führt zu einer stärkeren Fixierung der Faser umfassenden Suspension an der Innenseite der Form 106 und wirkt sich zudem vorteilhaft auf den Aushärtungsprozess aus, da der Suspension aus Fasern umfassendem Material ein größerer Anteil ihrer flüssigen Phase entzogen werden kann.

In der in der Figur 1 gezeigten Ausführungsform ist eine Transporteinheit 105, welche die erste 102 und die zweite Einrichtung 103 umfasst, vorgesehen. Die Transporteinheit 105 ist dabei als um eine Rotationsachse 112 drehbar ausgestaltet, wobei die erste Einrichtung 102 und die zweite Einrichtung 103 derart entlang des Umfangs der Transporteinheit 105 angeordnet sind, dass diese bei Rotation der Transporteinheit 105 abwechselnd über der Öffnung 108 der Form 106 platziert werden können. In der in Figur 1 gezeigten Ausführungsform ist die Transporteinheit 105 in einer Ebene, welche orthogonal zu einer Längsachse der Form 107 verläuft, angeordnet. Die Rotationsachse 112 der Transporteinheit 105 verläuft parallel zu einer Längsachse der Form 107, so dass durch Drehung der Transporteinheit die erste 102 und die zweite Einrichtung 103 abwechselnd über der Öffnung 108 der Form 106 platziert werden können. Diese Art der Anordnung der Transporteinheit 105 ist als beispielhaft zu verstehen. Alternativ kann die Transporteinheit 105 auch in einer Ebene angeordnet sein, welche nicht orthogonal zu der Längsachse 107 der Form 106 verläuft und beispielsweise in einem Winkel von 5° oder 10° oder 20° oder mehr zu einer orthogonal zu der Längsachse verlaufenden Ebene geneigt sein. Zum Antrieb der Transporteinheit 105 kann beispielweise ein Elektromotor vorgesehen sein.

Durch die drehbare Ausgestaltung der Transporteinheit 105 können die Verfahrwege der ersten 102 und der zweite Einrichtung 103, welche nötig sind um die beiden Einrichtungen abwechselnd über der Öffnung 108 der Form 106 zu platzieren, kurzgehalten werden. Somit kann die für die Herstellung und Behandlung benötigte Zeit reduziert und ein hoher Behälterdurchsatz erzielt werden. Die Transporteinheit 105 kann mit der Transportvorrichtung 110 zum Transport des Behälters mittels einer Verbindungseinrichtung 104 verbunden sein, so dass die Transporteinheit zusammen mit der Form bewegt wird. Die Verbindungseinrichtung 104 kann dabei zum einen eine starre Verbindung mit einem Teil des Karussells bewirken. Zum anderen erlaubt die Verbindungseinrichtung 104 eine Bewegung der Transporteinheit 105 sodass die Einrichtungen 102 und 103 über der Öffnung 108 positioniert werden können.

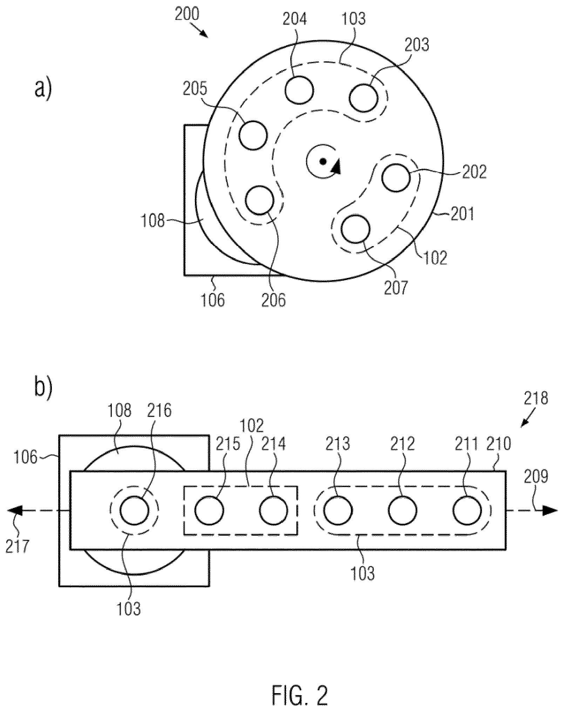

Die in der Figur 1 beschriebene Ausgestaltung der Transporteinheit 105 ist als beispielhaft zu verstehen. Die Transporteinheit 105 kann beispielweise auch, wie im Zusammenhang mit der Figur 2a beschrieben, als Revolverkopf 200 oder, wie im Zusammenhang der Figur 2b beschrieben, als linear arbeitende Transporteinheit 218 oder als jede andere Transporteinheit, die geeignet ist die erste 102 und die zweite Einrichtung 103 abwechselnd über der Öffnung 108 der Form 106 zu platzieren, ausgestaltet sein.

In einer Ausführungsform kann es vorgesehen sein, dass das Karussell 110 eine Vielzahl von Formen 106 und Transporteinheiten 105 umfasst, wobei diese entlang des Umfangs des Karusseils angeordnet sind und jeder der Formen 106 genau einer Transporteinheit 105 zugeordnet ist. Durch die Platzierung einer möglichst großen Anzahl von Formen 106 und Transporteinheiten 105 entlang des Umfangs des Karussells 110 kann ein möglichst hoher Behälterdurchsatz mit der Vorrichtung 100 erzielt werden.

In einer Ausführungsform kann ein Öffnen der Form 106 nach Ausführen aller Herstellungs- und Behandlungsschritte durch die erste Einrichtung 102 und die zweite Einrichtung 103 vorgesehen sein, so dass der fertig hergestellte und behandelte Behälter der Form 106 entnommen und an eine stromab angeordnete Vorrichtung, welche beispielsweise als ein zweites Karussell ausgebildet ist, übergeben werden kann. Nach Übergabe des Behälters an die stromab angeordnete Vorrichtung kann ein weiterer Behälter in der Form hergestellt und behandelt werden.

In einer weiteren Ausführungsform kann es vorgesehen sein, dass die erste Einrichtung 102 und die zweite Einrichtung 103 ausgebildet sind, die Herstellungs- und Behandlungsschritte in Abhängigkeit von einem von dem Karussell durchlaufenen Drehwinkel zu bewirken. Das Karussell kann hierfür eine Drehwinkelsteuerung umfassen. In einer spezielleren Ausführungsform können die erste Einrichtung 102 und die zweite Einrichtung 103 ausgebildet sein, die Herstellungs- und Behandlungsschritte während genau einer Umdrehung des Karussells 110 durchzuführen. So kann eine zeitlich besonders effiziente Herstellung und Behandlung der Behälter erreicht werden, da nach jedem Umlauf des Karussells, der in einer Form 106 hergestellte und behandelte Behälter entnommen und beispielsweise einer weiteren Vorrichtung zugeführt werden kann.

Figur 2a und b zeigen Draufsichten auf zwei alternative Ausführungsformen der in der Figur 1 beschriebenen Transporteinheit.

In der Figur 2a ist die Transporteinheit als Revolverkopf 200 ausgebildet, welcher eine erste 102 Einrichtung zum Durchführen eines Herstellungsschrittes eines Behälters aus Fasern umfassendem Material und eine zweite Einrichtung 103 zur Durchführung eines Behandlungsschrittes umfasst. In der hier gezeigten Ausführungsform weist der Revolverkopf 200 eine zylindrische Form 201 auf und kann um eine Drehachse 208 rotiert werden. In der in der Figur 2a beschriebenen Ausführungsform verläuft die Drehachse 208 des Revolverkopfes parallel zu der in der Figur 1 gezeigten Längsachse 107 der Form 106, so dass die erste Einrichtung 102 und die zweite Einrichtung 103 abwechselnd über der Öffnung 108 der Form 106 platziert werden können, um die Herstellungs- und Behandlungsschritte auszuführen. Alternativ kann es jedoch auch vorgesehen sein, dass die Drehachse 208 des Revolverkopfes 208 nicht parallel zu der Längsachse 107 der Form 106 verläuft. Die in der Figur 2a gezeigte Ausgestaltungsart des Revolverkopfes 200 als Zylinder ist als beispielhaft zu verstehen. Der Revolverkopf kann auch jede andere geeignete Form aufweisen.

Die erste Einrichtung 102 ist ausgebildet einen Herstellungsschritt zum Herstellen des Behälters in der Form 106 auszuführen. Die erste Einrichtung 102 kann eine erste Komponente 207 zum Ausbringen einer Suspension aus Fasern umfassenden Material durch die Öffnung 108 in das Innere 109 der Form 106 umfassen. Um ein gleichmäßiges Ausbringen der Suspension aus Fasern umfassenden Material in das Innere 109 der Form 106 zu erreichen, kann die erste Einrichtung 102 eine Düse umfassen, welche durch die Öffnung 108 der Form 106 in das Innere 109 der Form 106 eingeführt werden kann. In einer Ausführungsform kann es vorgesehen sein, dass die Düse sowohl parallel als auch senkrecht bezüglich der Längsachse 207 der Form 106 bewegt werden kann. In einer speziellen Ausführungsform kann es zudem vorgesehen sein, dass die Düse entsprechend eines Verfahrprofils durch das Innere der Form bewegt wird, um eine besonders gleichmäßige Verteilung der Suspension aus Fasern umfassenden Material in dem Inneren der Form zu erreichen. Die erste Komponente kann ferner eine Blase oder eine Preform umfassen, welche in das Innere der Form 106 eingeführt und mit einem Überdruck beaufschlagt werden kann. Wird die Blase oder die Preform im Inneren der Form 106 mit einem Überdruck beaufschlagt, so kann durch die Ausdehnung der Blase oder der Preform eine Fixierung der Suspension aus Fasern umfassendem Material an der Wandung 101 der Form 106 erreicht werden. Dies führt zu einer besonders gleichmäßigen Verteilung des Fasern umfassenden Materials in der Form 106. Somit können besonders gleichmäßig geformte Behälter aus Fasern umfassendem Material erzeugt werden. Beispielsweise kann es vorgesehen sein die Blase oder die Preform mit einem Druck von 1 bar, 2 bar, 5 bar, 10 bar oder 50 bar zu beaufschlagen. In einer Ausführungsform kann es vorgesehen sein, dass die Blase oder die Preform nach dem Ausformen der Suspension aus Fasern umfassendem Material zu einem Behälter in dem Behälter verbleibt und eine Innenbeschichtung des Behälters bildet. Alternativ kann die Preform oder die Blase nach dem Ausformen der Suspension aus Fasern umfassendem Material zu einem Behälter auch wieder aus dem Behälter herausgeführt werden.

Die erste Einrichtung 102 kann außerdem eine zweite Komponente 202 zum Aushärten der Suspension aus Fasern umfassenden Material umfassen.

Die zweite Komponente 202 kann eine erste Unterkomponente zum Beaufschlagen mit UV-, Infrarot-, Elektronenstrahlung und/oder ein Plasma umfassen. In einer Ausführungsform kann die erste Unterkomponente auch als Induktionsheizung ausgestaltet sein oder eine solche umfassen. Beispielsweise kann die erste Unterkomponente als Induktionsspule ausgestaltet sein oder diese umfassen. Durch Anlegen eines Wechselstroms an die Induktionsspule kann durch diese ein magnetisches Wechselfeld erzeugt werden, so dass die erste Unterkomponente auch zum Beaufschlagen mit magnetischen Wechselfeldern ausgebildet sein kann. Eine Induktionsheizung kann insbesondere dann vorgesehen sein, wenn die Form 106 ein metallisch leitendes Material, vorzugsweise ein ferromagnetisches Material umfasst. Durch Beaufschlagen der Form 106 mit magnetischen Wechselfeldern können in der Form 106 elektrische Wirbelströme erzeugt werden, welche wiederum zu einer Erwärmung der Form und somit zu einem Aushärten der Suspension aus Fasern umfassendem Material führen. Es kann auch vorgesehen sein, dass die durch magnetische Wechselstrahlung erzeugte Wärme für die Aktivierung, Reaktion und/oder Vernetzung von optional in der Suspension enthaltener Additive oder einer auf den Behälter aufgebrachten Beschichtung genutzt wird, wodurch beispielsweise eine Gas- oder Flüssigkeitsbarriere in dem Behälter erzeugt werden kann und/oder andere Eigenschaften des Behälters verbessert werden können. In einer Ausführungsform kann es auch vorgesehen sein, dass die Induktionsheizung zum Reinigen der Form 106 verwendet wird. Beispielsweise können in der Form 106 vorhandene Reste von Fasern umfassendem Material, welche sich beispielsweise in der Perforation oder dem Gitter der Form 106 ablagern können, durch Aufheizen der Form 106 verbrannt und somit entfernt werden. In einer Ausführungsform kann es auch vorgesehen sein, dass die Form zum Aushärten der Suspension aus Fasern umfassendem Material mit einem Wärmeträgermedium, wie beispielsweise Öl, erwärmt wird. Hierfür kann es beispielsweise vorgesehen sein, dass die Form wenigstens eine Leitung umfasst, durch welche das Wärmeträgermedium durch die Form geführt werden kann. In einer Ausführungsform kann die erste Unterkomponente ausgebildet sein, durch die Öffnung 108 der Form 106 in deren Inneres 109 eingeführt zu werden. Durch das Beaufschlagen mit UV-, Infrarot-, Elektronenstrahlung, magnetischen Wechselfeldern und/oder einem Plasma kann ein gleichmäßiges Aushärten der Suspension aus Fasern umfassenden Material erreicht werden und insbesondere ein Schrumpfen des Behälters während des Aushärtungsvorgangs, wie es typischerweise beim Beaufschlagen mit Heißluft der Fall ist, vermieden werden. Außerdem können eventuell im Flascheninneren vorhandene Keime effizient abgetötet werden. Um den Aushärtungsprozess zu unterstützen, kann die erste Unterkomponente ausgebildet sein die Öffnung der Form vakuumdicht zu verschließen und das Innere der Form mit einem Überdruck zu beaufschlagen. Durch den angelegten Überdruck können die Fasern an der Wand der Form fixiert werden und die flüssige Phase der Suspension aus Fasern umfassendem Material aus der Form herausgepresst werden. Die erste Unterkomponente kann beispielsweise ausgebildet sein, das Innere 109 der Form 106 mit einem Überdruck von 2 bar, 5 bar oder 10 bar bezüglich eines vorherrschenden Umgebungsdrucks zu beaufschlagen. Ein höherer Überdruck führt zu einer stärkeren Fixierung der Suspension aus Fasern umfassenden Material an der Innenseite der Form 106 und wirkt sich zudem vorteilhaft auf das Aushärten der Suspension aus Fasern umfassendem Material aus, da ein größerer Anteil der flüssigen Phase der Suspension aus der Form herausgepresst werden kann. Die erste Unterkomponente kann hierfür beispielsweise eine wie bereits weiter oben beschriebene Blase oder Preform umfassen, welche in das Innere der Form eingeführt und mit einem Überdruck beaufschlagt werden kann. Somit kann auch eine Fixierung der Suspension aus Fasern umfassendem Material an der Wandung 101 der Form 106 während des Aushärtens bzw. Trocknens erreicht und somit besonders gleichmäßig ausgeformte Behälter erzeugt werden. Optional kann die zweite Komponente 202 auch ausgebildet sein, die Suspension aus Fasern umfassendem Material mittels Heißluft auszuhärten. In einer speziellen Ausführungsform kann es beispielsweise vorgesehen sein, die in die Form 106 eingebrachte Suspension aus Fasern umfassenden Material und/oder die Form 106 zuerst mit UV-, Infrarot-, Elektronenstrahlung, magnetischen Wechselfeldern und/oder einem Plasma zu beaufschlagen und das Fasern umfassende Material teilweise auszuhärten. Anschließend kann das Beaufschlagen mit Wärme zur Endaushärtung vorgesehen sein.

Zur Steuerung und Kontrolle des Aushärtens der Suspension aus Fasern umfassendem Material in der Form mittels der zweiten Komponente 202 kann die Form 106 auf einer Waage platziert sein. Durch Bestimmen des Gewichts der Form während des Aushärtens kann ein Flüssigkeitsanteil der Suspension aus Fasern umfassendem Material, beispielsweise ein Wasseranteil, bestimmt und somit der Aushärtevorgang der Suspension aus Fasern umfassendem Material überwacht werden. Basierend auf dem Gewicht der Form 106 kann beispielsweise bestimmt werden, wann der Aushärtevorgang der Suspension aus Fasern umfassendem Material in der Form 106 abgeschlossen ist.

In einer Ausführungsform kann es vorgesehen sein, dass der hergestellte Behälter von der ersten Einrichtung 102 mittels der optional in das Innere des Behälters eingeführten Blase oder Preform an die zweite Einrichtung 103 übergeben wird. Die Blase oder Preform kann zur Übergabe beispielsweise mit einem Druck von 0,1 bar bis 3 bar beaufschlagt sein. Die Blase oder Preform kann jedoch auch mit jedem beliebigen anderen Druck beaufschlagt sein. Dies ermöglicht ein besonders schonendes Greifen und Übergeben der hergestellten Behälter, wodurch Beschädigungen an den Behältern vermieden werden können. Ferner wird ein Dorn oder eine entsprechende Vorrichtung zum Greifen und Übergeben der Behälter nicht benötigt. Eine solche kann optional dennoch vorgesehen sein.

Die zweite Einrichtung 103 ist ausgebildet einen Behandlungsschritt an dem Behälter durchzuführen. Die zweite Einrichtung 103 kann hierfür unterschiedliche Komponenten, welche zur Durchführung verschiedener Arten von Behandlungsschritten, wie beispielsweise ein Beschichten, ein Befüllen, ein Etikettieren oder ein Verschließen des Behälters, ausgebildet sind, umfassen. In der in Figur 2a beschriebenen Ausführungsform umfasst die zweite Einrichtung 103 eine dritte Komponente 203 zum Beschichten des Behälters, eine vierte Komponente 204 zum Füllen des Behälters, eine fünfte Komponente 206 zum Etikettieren des Behälters und/oder eine sechste Komponente 205 zum Verschließen des Behälters. Alternativ kann die fünfte Komponente auch als Direktdruckvorrichtung ausgeführt sein. Die Direktdruckvorrichtung kann eine Aushärteeinheit zum Aushärten der mittels der Direktdruckvorrichtung aufgebrachten Druckfarben auf der Behälteroberfläche umfassen. Die Aushärteeinheit kann beispielsweise eine UV-Lichtquelle und/oder eine Wärmestrahlungsquelle umfassen. Die fünfte Komponente kann optional auch zum Etikettieren und zum Bedrucken des Behälters ausgestaltet sein.

Auch hier kann eine Übergabe des Behälters zwischen den verschiedenen Komponenten der zweiten Einrichtung 103, beispielsweise von der dritten Komponente zu der vierten Komponente oder zwischen allen anderen Komponenten der zweiten Einrichtung 103, mittels der Blase oder Preform erfolgen. Auch ein Abtransport des fertig behandelten Behälters von der zweiten Einrichtung, beziehungsweise von deren letzter Komponente, kann mittels der Blase oder Preform realisiert werden.

Die dritte Komponente 203 kann beispielsweise eine Düse umfassen, die ausgebildet ist durch die Öffnung 108 der Form 106 in deren Inneres 109 geführt zu werden, um das Innere des sich darin hergestellten Behälters zu beschichten. Durch das Ausbringen der Beschichtung mittels einer Düse kann die Beschichtung gleichmäßig auf der Innenseite des Behälters verteilt werden. Die Beschichtung kann als Barriere zwischen der Behälteroberfläche aus dem Faser umfassenden Materials und einem sich in dem Behälter befindlichen Produkt dienen. Durch das Aufbringen der Beschichtung auf die Innenseite des Behälters kann insbesondere ein Aufweichen des Behälters durch ein flüssiges Produkt vermieden werden. Die Beschichtung kann beispielsweise Polyethylen sein oder Polyethylen umfassen. Die Beschichtung kann jedoch auch jedes andere Material umfassen, welches als Barriere zwischen der Faser umfassenden Behälterwand und dem sich in dem Behälter befindlichen Produkt geeignet ist.

Die vierte Komponente 204 kann beispielsweise einen Füllstutzen zum Abfüllen eines Produkts in den Behälter umfassen und mittels einer Zuleitung mit einem Vorratsbehälter verbunden sein, in welchem das Produkt enthalten ist. Die vierte Komponente ist ausgebildet, den Füllstutzen in eine Behälteröffnung einzuführen, um das Produkt in das Innere des Behälters auszubringen. Die vierte Komponente kann zudem ausgebildet sein, das Innere des in der Form hergestellten Behälters mit einem Unterdruck zu beaufschlagen, bevor das Produkt mittels des Füllstutzens in das Innere des Behälters gefüllt wird, wodurch der Behälter effizienter mit dem Produkt befüllt werden kann.

Die fünfte Komponente 206 kann beispielsweise einen Roboter umfassen, welcher ausgebildet ist ein permeables Etikett vor dem Einbringen der Suspension aus Faser umfassenden Material durch die erste Komponente der ersten Einrichtung 102 in das Innere 109 der Form 106 zu platzieren. Anschließend kann ein Einbringen der Suspension aus Fasern umfassendem Material in die Form 101 und ein Aushärten der Suspension aus Fasern umfassendem Material mittels der ersten Einrichtung 102 vorgesehen sein. Durch die permeable Ausgestaltung des Etiketts, kann die flüssige Phase der Fasern umfassenden Suspension bei Beaufschlagen des Inneren der Form 101 mit einem Überdruck oder bei Beaufschlagen des Hohlraums 104 mit einem Unterdruck das Etikett passieren, wodurch ein gleichmäßiges und vollständiges Aushärten des Behälters auch in dem Bereich, in welchem das Etikett aufgebracht ist, erreicht werden kann. Durch das Aushärten der Suspension aus Fasern umfassenden Material verbindet sich das Fasern umfassende Material mit dem permeablen Etikett, so dass das Etikett sicher auf dem Behälter fixiert wird. In einer Ausführungsform kann es vorgesehen sein, dass die fünfte Komponente außerhalb der Transporteinheit angeordnet ist.

Alternativ kann die fünfte Komponente 206 beispielsweise auch ausgebildet sein, ein nicht permeables Etikett mittels eines Roboters vor dem Einbringen der Suspension aus Fasern umfassendem Material durch die erste Komponente 207 der ersten Einrichtung 102 in die Form einzubringen. Anschließend kann die Suspension aus Fasern umfassendem Material in die Form 106 ausgebracht werden. Um ein gleichmäßiges und vollständiges Aushärten des Behälters zu erreichen, kann es vorgesehen sein, dass die perforierte oder als Gitter ausgebildete Wandung 101 der Form 106 von außen mit einem Unterdruck beaufschlagt wird, so dass die Suspension aus Fasern umfassendem Material an der Innenseite der Form 106 fixiert wird und der Suspension die flüssige Phase entzogen wird. Die Aushärtungskomponente kann beispielweise eine perforierte oder als Gitter ausgebildete Fläche umfassen, welche entsprechend dem Bereich der Innenseite der Form 106, an welcher das Etikett aufgebracht wurde, gekrümmt ist und mit einem Unterdruck beaufschlagt werden kann. Die perforierte oder als Gitter ausgebildete Fläche kann anschließend auf dem Bereich des in der Form ausgeformten Behälters platziert werden, auf welchem das Etikett aufgebracht ist. Die Aushärtungskomponente kann diesen Bereich der Innenseite der Form mit einem Unterdruck beaufschlagen und somit eine Aushärtung der Suspension aus Fasern umfassendem Material auch im Bereich des nicht permeablen Etiketts erreichen. Die Aushärtungskomponente kann zudem ausgebildet sein, die der Suspension durch den Unterdruck entzogene flüssige Phase aus der Form 106 herauszuführen. Durch die Aushärtung der Suspension aus Fasern umfassendem Material verbindet sich das Fasern umfassende Material mit dem Etikett, so dass das Etikett fest mit dem ausgehärteten Behälter verbunden ist.

Die sechste Komponente 205 kann beispielsweise eine zweite Unterkomponente umfassen, die zum Platzieren eines ersten Deckels aus ausgehärtetem Fasern umfassenden Material in einer Behälteröffnung ausgebildet ist. Die sechste Komponente 205 kann des Weiteren einen Stempel umfassen, und ausgebildet sein mittels des Stempels einen zweiten Deckel aus noch nicht ausgetrocknetem Fasern umfassendem Material auf der Behälteröffnung zu platzieren und den zweiten Deckel mittels des Stempels auf die Behälteröffnung zu pressen. Dadurch kann die Flasche sicher versiegelt werden, ohne dass Faser umfassendes Material während des Verschließprozesses in die Flasche gelangt und das darin befindliche Produkt verunreinigt.

Es kann auch vorgesehen sein, dass die zweite Einrichtung 103 weitere hier nicht explizit aufgeführte Komponenten umfasst. So kann die zweite Einrichtung 103 beispielsweise eine siebte Komponente umfassen, welche ausgebildet ist, das Innere des Behälters nach Ausbringen der Beschichtung zu reinigen und/oder zu sterilisieren, bevor das Produkt durch die vierte Komponente in das Innere des Behälters gefüllt wird. Eine solche Komponente kann insbesondere dann vorgesehen sein, wenn der Behälter aus Fasern umfassendem Material mit einem Produkt, welches ein Lebensmittel umfasst, befüllt werden soll.

In der in der Figur 2a gezeigten Ausführungsform sind die verschiedenen Komponenten der ersten 102 und der zweiten Einrichtung 103 derart auf dem Zylinder 201 angeordnet, dass bei einer taktweisen Rotation des Zylinders 201 gemäß der eingezeichneten Drehrichtung, die Herstellungs- und Behandlungsschritte in der richtigen Reihenfolge durchgeführt werden können, selbst wenn Herstellungs- und Behandlungsschritte einander zumindest teilweise abwechseln. Damit kann die Drehrichtung des Revolverkopfes während einer kompletten Herstellungs- und Behandlungszyklus beibehalten werden, was die Steuerung vereinfacht.

Alternativ kann vorgesehen sein, dass die einzelnen Komponenten der ersten 102 und zweiten Einrichtung 103 gruppenweise in dem Revolverkopf 200 angeordnet sind. Die Positionierung der jeweiligen Komponente über der Öffnung 108 der Form 106 kann dann durch Drehen des Revolverkopfes in eine erste Richtung oder in eine zweite, der ersten Richtung entgegengesetzte Richtung bewirkt werden, je nachdem, welcher Behandlungs- oder Herstellungsschritt wann durchzuführen ist. Die Positionierung kann in diesem Fall vorteilhaft durch einen Elektromotor oder Servomotor zusammen mit einer elektronischen Steuereinheit, wie einer zentralen Steuereinheit der Vorrichtung (etwa ein Computer) bewirkt werden, wobei die Reihenfolge der zu positionierenden Komponenten in einem der Steuereinheit zugeordnet Speicher hinterlegt sein kann. Diese Ausführung erlaubt ein einfaches Umstellen der Reihenfolge der Herstellungs- und Behandlungsschritte.

Um eine genaue Platzierung der verschiedenen Komponenten über der in der Figur 1 beschriebenen Form 106 zu erreichen, ist es vorgesehen, dass die verschiedenen Komponenten in radialer Richtung äquidistant bezüglich der Drehachse 208 des Revolverkopfs angeordnet sind. In einer spezielleren Ausführungsform kann es zudem vorgesehen sein, dass die verschiedenen Komponenten in der senkrecht zu der Drehachse 208 des Revolverkopfes 200 verlaufenden Ebene beweglich gelagert sind, so dass eine Feinausrichtung der verschiedenen Komponenten über der Form durchgeführt werden kann. Der in der Figur 2a gezeigt Revolverkopf 200 ist derart ausgestaltet, dass bei taktweisem Betrieb in der eigenzeichneten Drehrichtung, zuerst die fünfte Komponente 206 über der Öffnung der Form platziert werden kann, um ein Etikett durch die Öffnung 108 in das Innere 109 der Form 106 einzubringen und anschließend die erste Komponente 207 über der Form platziert werden kann, um eine Suspension aus Fasern umfassendem Material in die Form 106 einzubringen. Durch eine weitere Drehung des Revolverkopfes entlang der Drehrichtung kann die zweite Komponente 202 über der Form ausgerichtet werden, um die Suspension aus Fasern umfassendem Material in der Form 106 auszuhärten. Anschließend kann die dritte Komponente 203 und die vierte Komponente 204 über der Form platziert werden, um den ausgehärteten Behälter mit einer Beschichtung zu versehen und den beschichteten Behälter mit einem Produkt zu befüllen. Durch eine weitere Rotation des Revolverkopfes in Drehrichtung kann die sechste Komponente 205 über der Form ausgerichtet werden und der Behälter verschlossen werden. Die in der Figur 2a gezeigte Anordnung der verschiedenen Komponenten auf dem Revolverkopf ist als beispielhaft zu verstehen. Die verschiedenen Komponenten können auch auf andere Weise auf dem Revolverkopf angeordnet sein, so dass die eben beschriebenen Schritte auch in einer anderen Reihenfolge durchgeführt werden können. In einer alternativen Ausführungsform können auch weitere hier nicht explizit aufgeführte Komponenten auf dem Revolverkopf 200 angeordnet sein.

In der Figur 2b ist eine zur Figur 2a alternative Ausführungsform einer Transporteinheit 218 gezeigt, welche als linear arbeitende Transporteinheit 218 ausgebildet ist. Die Transporteinheit 218 umfasst einen Rahmen 210, an welchem eine erste Einrichtung 102 zum Durchführen eines Herstellungsschrittes und eine zweite Einrichtung 103 zum Durchführen eines Behandlungsschrittes angeordnet sind. Die Transporteinheit 218 kann entlang einer Translationsachse 209 verschoben werden. Hierfür kann die Transporteinheit 218 beispielsweise auf Schienen angeordnet sein und mittels eines Elektromotors auf den Schienen entlang der Transportrichtung 209 bewegt werden. Der Elektromotor kann beispielsweise als Linearantrieb ausgebildet sein. Die Translationsachse 209 verläuft dabei nicht parallel zu der in der Figur 1 gezeigten Längsachse 107 der Form 106, so dass die erste 102 und die zweite Einrichtung 103 über der in der Figur 1 beschriebenen Form 106 platziert werden können. Vorzugsweise verläuft die Translationsachse 209 orthogonal zu der Längsachse 107 der Form 106. In der hier gezeigten Ausführungsform umfasst die erste Einrichtung 102 eine erste Komponente 215 zum Ausbringen einer Suspension aus Fasern umfassenden Material und eine zweite Komponente 214 zum Aushärten der Suspension aus Fasern umfassendem Material. Die zweite Einrichtung 217 umfasst eine dritte Komponente 213 zum Beschichten des Behälters eine vierte Komponente 212 zum Befüllen des Behälters, eine fünfte Komponente 216 zum Etikettieren des Behälters und eine sechste Komponente 211 zum Verschließen des Behälters. Die verschiedenen Komponenten können entsprechend der zur Figur 2a beschriebenen Ausführungsformen ausgebildet sein.

Vorzugsweise sind die verschiedenen Komponenten der ersten 102 und der zweiten Einrichtung 103 derart auf dem Rahmen angeordnet, dass die verschiedenen Herstellung- und Behandlungsschritte bei Verschieben des Rahmens entlang einer der beiden Richtungen der eingezeichneten Translationsachse 209 ausgeführt werden können. Ein zeitaufwendiges abwechselndes Verfahren des Rahmens entlang der einen und der anderen Richtung der Translationsachse 209 ist somit nicht notwendig. Alternativ kann die Anordnung der Komponenten auch entsprechend der Ausführungsform der Figur 2a in Gruppen erfolgen und durch Bewegen des Rahmens mittels geeigneter Steuerung wie in Figur 2a beschrieben eine flexible Positionierung durch eine Bewegung des Rahmens in eine erste Richtung und eine zweite, der ersten Richtung entgegengesetzte Richtung bewirkt werden. Durch die in der Figur 2b gezeigten Anordnung der verschiedenen Komponenten auf dem Rahmen, kann bei anfänglicher Platzierung der sechsten Komponente 216 über der Öffnung 108 der Form 106 und bei anschließendem Verschieben des Rahmens entlang der durch das Bezugszeichnen 217 gekennzeichneten Richtung der Translationsachse 209, zunächst ein Etikett in die Form ausgebracht werden, anschließend die beiden Herstellungsschritte mittels der ersten und der zweiten Komponente durchgeführt werden und danach der in der Form 106 hergestellte Behälter mittels der dritten Komponente beschichtet, mittels der vierten Komponente befüllt und mittels der sechsten Komponente verschlossen werden. In einer Ausführungsform kann es vorgesehen sein, dass die verschiedenen Komponenten in einer parallel zu der Translationsrichtung 209 der Transporteinheit 218 verlaufenden Ebene beweglich gelagert sind, so dass eine Feinjustierung der Komponenten über der Öffnung 108 der Form 106 durchgeführt werden kann. Die in der Figur 2b gezeigt Anordnung der verschiedenen Komponenten ist als beispielhaft zu verstehen. Die verschiedenen Komponenten können auch in einer anderen Reihenfolge angeordnet sein, so dass die Herstellungs- und Behandlungsschritte auch in einer anderen Reihenfolge durchgeführt werden können. In einer Ausführungsform kann es zudem vorgesehen sein, dass nicht alle der in der Figur 2b gezeigten Komponenten 211 - 216 auf dem Rahmen angeordnet sind. In einer alternativen Ausführungsform können auch weitere hier nicht explizit aufgeführte Komponenten auf der Transporteinheit 218 angeordnet sein.

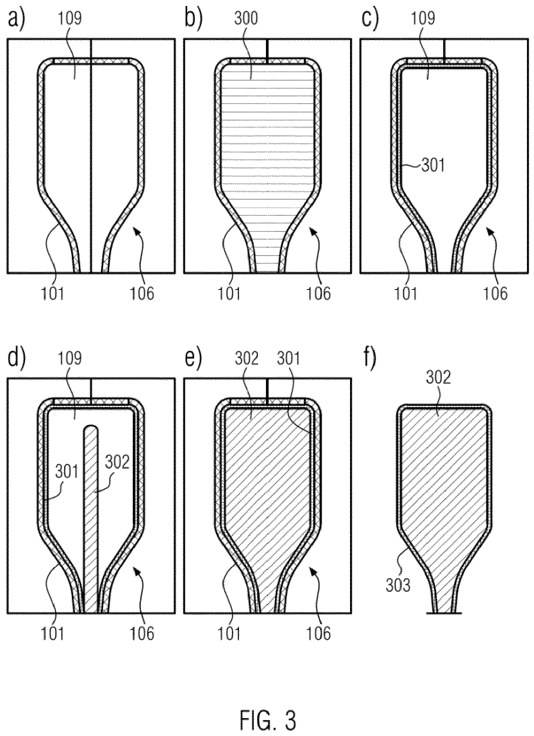

Figuren 3a - f zeigen schematisch den Herstellungsprozess eines Behälters gemäß einer Ausführungsform. Der in den Figuren 3a - f schematisch dargestellte Herstellungsprozess kann mit der in der Figur 1 beschriebenen Vorrichtung 100 und den in den Figuren 2a und b gezeigten Ausführungsformen der Transporteinheit 200 und 218 durchgeführt werden.

Figur 3a zeigt eine Seitenansicht einer Form 106 zum Herstellen eines Behälters aus Fasern umfassendem Material. Die Form kann einen Hohlraum 109 mit einer Wandung 101 zum Ausformen des Behälters umfassen. Verschiedene Ausgestaltungen der Form 106 wurden bereits ausführlich im Zusammenhang mit der Figur 1 beschrieben, auf welche an dieser Stelle verwiesen wird.

Wie in der Figur 3b gezeigt, kann der Hohlraum 109 der Form 106 in einem ersten Schritt mit einer Suspension aus Fasern umfassendem Material 300 beaufschlagt werden. Das Beaufschlagen des Hohlraums 109 der Form 106 mit der Suspension aus Fasern umfassendem Material 300 kann wie im Zusammenhang mit den Figuren 1 und 2 a und b beschrieben, mit der ersten Einrichtung 102 zum Durchführen eines Herstellungsschritts zum Herstellen des Behälters aus Fasern umfassendem Material erfolgen.

Um, wie in der Figur 3c gezeigt, eine Anlagerung der Suspension aus Fasern umfassendem Material 301 an der Wandung 101 der Form 106 zu erreichen, kann das Innere 109 der Form 106 mit einem Überdruck beaufschlagt werden. Dies kann beispielsweise durch die im Zusammenhang mit den Figuren 2a und b beschriebene erste Unterkomponente der ersten Einrichtung 102 erfolgen. Alternativ oder zusätzlich kann zur Anlagerung der Suspension aus Fasern umfassendem Material 301 an der Wandung 101 der Form 106 auch die Außenseiten der Form 106 mit einem Unterdruck beaufschlagt werden.

In einem nächsten Schritt kann, wie in der Figur 3d gezeigt, eine Blase 302 oder eine Preform 302 in das Innere 109 der Form 106 eingeführt werden. Die Blase 302 oder die Preform 302 kann ein Beschichtungsmaterial umfassen und nicht nur zum Ausformen, sondern auch zum Beschichten des Inneren des in der Form 106 hergestellten Behälters vorgesehen sein. Hierfür kann sich die Blase 302 oder die Preform 302 während dem Aushärten des Behälters mit dessen Innenseite verbinden und nach dem Aushärten als Innenbeschichtung in dem Behälter verbleiben. Beispielsweise kann mittels dem Beschichtungsmaterial eine Gas- oder Flüssigkeitsbarriere in dem Inneren des Behälters erzeugt werden. Alternativ kann die Blase 302 oder der Preform 302 auch ein elastisch reversibel verformbares Material umfassen und nur zum Ausformen des Behälters vorgesehen sein und nach dem Ausformprozess wieder aus dem Inneren Behälter entfernt werden.

Wie in der Figur 3e gezeigt, kann durch Beaufschlagen der Blase 302 oder der Preform 302 mit einem Überdruck, die an der Wandung 101 der Form 106 angelagerte Suspension aus Fasern umfassendem Material 301 zu einem Behälter gepresst und getrocknet werden. Durch das Anpressen der Blase 302 oder der Preform 302 an die an der Wandung 101 der Form 106 angelagerte Suspension aus Fasern umfassendem Material, kann sich die Blase 302 oder die Preform 302, sofern diese als Innenbeschichtung vorgesehen sind, während dem Aushärten mit der angelagerten Suspension aus Fasern umfassendem Material 301 verbinden und eine Innenbeschichtung des fertig ausgehärteten Behälters ausbilden. In diesem Fall kann die Blase 302 oder die Preform 302 nach dem Aushärten der Suspension als Innenbeschichtung in dem Inneren des Behälters verbleiben. Falls die Blase oder die Preform ein elastisch reversibles Material umfasst und nicht als Innenbeschichtung vorgesehen ist, kann diese nach dem Aushärtevorgang des Behälters auch wieder aus dem Inneren des Behälters entfernt werden. In diesem Zusammenhang wird auch auf die Figurenbeschreibung der Figuren 2a und b verwiesen, wo das Aushärten des Behälters aus Fasern umfassendem Material mittels der Blase oder der Preform genauer beschrieben ist.

Wie in der Figur 3f gezeigt, kann nach dem vollständigen Aushärten des Behälters 303 die Form 106 von dem Behälter entfernt werden. Die Blase 302 oder die Preform 302 kann wie oben beschrieben in dem Behälter als Innenbeschichtung verbleiben. Auch wenn die Blase oder die Preform aus einem elastisch reversiblen Material ausgestaltet ist und nicht als Innenbeschichtung vorgesehen ist, können diese nach dem Öffnen der Form weiterhin mit einem Überdruck beaufschlagt werden und in dem fertig ausgehärteten Behälter verbleiben. Dies kann beispielsweise vorgesehen sein, um den Behälter mittels der Blase oder Preform, wie im Zusammenhang mit den Figuren 1 und 2a und b beschrieben, von der ersten Einrichtung 102 an die zweite Einrichtung 103 zu übergeben oder zwischen den verschiedenen Komponenten der zweiten Einrichtung 103 zu transportieren. Mittels der Blase 302 oder Preform 302 kann ein besonders schonendes Greifen und Übergeben der hergestellten Behälter erreicht werden, wodurch Beschädigungen an den Behältern vermieden werden können. Ferner wird ein Dorn oder eine entsprechende Vorrichtung zum Greifen und Übergeben der Behälter nicht benötigt. Eine solche kann optional dennoch vorgesehen sein. Ein Übergeben des Behälters von der ersten Einrichtung 102 an die zweite Einrichtung 103 mittels der Preform oder der Blase kann auch vorgesehen sein, wenn die Blase oder die Preform in dem Behälter als Beschichtung verbleibt.

## Patentansprüche

1. Vorrichtung zum Herstellen eines Behälters aus einem Faser umfassenden Material und zum Behandeln des Behälters, wobei die Vorrichtung eine Form (106), eine erste Einrichtung (102) zum Durchführen mindestens eines Herstellungsschritts zum Herstellen des Behälters aus dem Faser umfassenden Material in der Form (106) und eine zweite Einrichtung (103) zum Durchführen mindestens eines Behandlungsschrittes zum Behandeln des Behälters umfasst und wobei die zweite Einrichtung (103) ausgebildet ist, den Behälter in der Form (106) zu behandeln.

2. Vorrichtung nach Anspruch 1, wobei die erste (102) und die zweite Einrichtung (103) in einer senkrecht zu einer Längsachse (107) der Form (106) verlaufenden Ebene beweglich sind, um abwechselnd über der Form (106) positioniert werden zu können, um den Herstellungsschritt und den Behandlungsschritt auszuführen zu können.

3. Vorrichtung nach Anspruch 1 oder 2, wobei eine Transporteinheit (105, 200, 218) vorgesehen ist, welche die erste (102) und die zweite Einrichtung (103) umfasst, und wobei die Transporteinheit (105, 200) um eine parallel zu der Längsachse (107) verlaufende Achse (112, 208) rotiert werden kann und/oder wobei die Transporteinheit (218) entlang einer nicht parallel zu der Längsachse (107) verlaufenden Achse (209) verschoben werden kann, um abwechselnd über der Form (106) positioniert werden zu können, um den Herstellungsschritt und den Behandlungsschritt ausführen zu können.

4. Vorrichtung nach einem der Ansprüche 1 bis 3, wobei die erste Einrichtung (102) eine erste Komponente (207, 215) zum Ausbringen einer Suspension aus Fasern umfassenden Materials in die Form und eine zweite Komponente (202, 214) zum Aushärten der in die Form (106) einbrachten Suspension aus Fasern umfassenden Materials umfasst, wobei die erste Komponente (207, 215) optional eine Düse zum Ausbringen der Suspension aus Fasern umfassenden Materials in die Form (106) umfasst und/oder wobei die zweite Komponente (202, 214) zum Aushärten der Suspension aus Fasern umfassenden Materials optional eine erste Unterkomponente zum Beaufschlagen mit UV-, Infrarot-, Elektronenstrahlung, magnetischen Wechselfeldern, und/oder einem Plasma umfasst; wobei die erste Unterkomponente weiterhin optional ausgebildet ist das Innere (109) der Form (106) mit einem Überdruck zu beaufschlagen, wobei die Form (106) optional eine Öffnung (108) umfasst und wobei die Düse und die erste Unterkomponente ausgebildet sind durch die Öffnung (108) in das Innere (109) der Form (106) geführt zu werden.

5. Vorrichtung nach Anspruch 4, wobei die zweite Komponente eine Blase (302) oder eine Preform (302) umfasst, welche in das Innere (109) der Form (106) eingeführt werden kann und zum Aushärten der in die Form (106) eingebrachten Suspension mit einem Überdruck beaufschlagt werden kann.

6. Vorrichtung nach Anspruch 5, wobei der durch die erste Einrichtung (102) hergestellte Behälter mittels der in das Innere des Behälters eingeführten Blase (302) oder Preform (302) von der ersten Einrichtung (102) an die zweite Einrichtung (103) übergeben werden kann.

7. Vorrichtung nach einem der Ansprüche 1 bis 6, wobei die zweite Einrichtung (103) zum Durchführen mindestens eines Behandlungsschrittes eine dritte Komponente (203, 213) zum Beaufschlagen des Behälters mit einer Beschichtung, eine vierte Komponente (204, 212) zum Befüllen des Behälters mit einer Flüssigkeit, eine fünfte Komponente (206, 216) zum Etikettieren des Behälters und/oder eine sechste Komponente (205, 211) zum Verschließen des Behälters umfasst.

8. Verfahren zum Herstellen eines Behälters aus einem Fasern umfassenden Material in einer Form (106) und zum Behandeln des Behälters, wobei das Herstellen mindestens einen durch eine erste Einrichtung (102) ausgeführten Herstellungsschritt und das Behandeln mindestens einen durch eine zweite Einrichtung (103) ausgeführten Behandlungsschritt umfasst und sich der Behälter bei Durchführung des Behandlungsschrittes in der Form (106) befindet.

9. Verfahren nach Anspruch 8, wobei die erste (102) und die zweite Einrichtung (103) in einer senkrecht zu einer Längsachse (107) der Form verlaufenden Ebene bewegt werden, um abwechselnd über der Form (106) positioniert zu werden, um den Herstellungsschritt und den Behandlungsschritt auszuführen.

10. Verfahren nach Anspruch 8 oder 9, wobei eine Transporteinheit (105, 200, 218) vorgesehen ist, die die erste (102) und die zweite Einrichtung (103) umfasst und wobei die Transporteinheit (105, 200) um eine parallel zu der Längsachse (107) der Form (106) verlaufenden Achse (112) rotiert wird und/oder wobei die Transporteinheit (218) entlang einer nicht parallel zu der Längsachse (107) der Form (106) verlaufenden Achse (209) bewegt wird, um die erste Einrichtung (102) und die zweite Einreichung (103) abwechselnd über der Form (106) zu positionieren, um den Herstellungsschritt und den Behandlungsschritt auszuführen.

11. Verfahren nach Anspruch 10, wobei der Herstellungsschritt ein Ausbringen einer Suspension aus Fasern umfassendem Material in die Form (106) mittels einer ersten Komponente (207, 215) der ersten Einrichtung (102) und ein Aushärten der Suspension aus Fasern umfassenden Material in der Form (106) mittels einer zweiten Komponente (202, 214) der ersten Einrichtung (102) umfasst, wobei optional zum Ausbringen der Suspension aus Fasern umfassendem Material eine Düse durch eine Öffnung (108) der Form (106) in das Innere (109) der Form (106) geführt wird und zum Aushärten der Suspension aus Fasern umfassendem Material optional eine erste Unterkomponente der ersten Einrichtung (102) zum Beaufschlagen mit UV-, Infrarot-, Elektronenstrahlung, magnetischen Wechselfeldern und/oder einem Plasma durch eine Öffnung (108) in das Innere (109) der Form (106) geführt wird; wobei das Innere (109) der Form (106) weiterhin optional durch die erste Unterkomponente mit einem Überdruck beaufschlagt wird, wobei die erste Unterkomponente optional basierend auf einer Geometrie des Behälters und/oder auf einer Verteilung der Suspension aus Fasern umfassendem Material in der Form (106) verfahren wird.

12. Verfahren nach Anspruch 11, wobei die zweite Komponente eine Blase (302) oder eine Preform (302) umfasst, welche in das Innere (109) der Form (106) eingeführt wird und zum Aushärten der in die Form (106) eingebrachten Suspension mit einem Überdruck beaufschlagt wird.

13. Verfahren nach Anspruch 12, wobei der durch die erste Einrichtung (102) hergestellte Behälter mittels der in das Innere des Behälters eingeführten Blase (302) oder Preform (302) von der ersten Einrichtung (102) an die zweite Einrichtung (103) übergeben wird.

14. Verfahren nach einem der Ansprüche 8 bis 13, wobei der Behandlungsschritt ein Beschichten des Behälters durch eine dritte Komponente (203, 213) der zweiten Einrichtung (103) und/oder ein Befüllen des Behälters mit einer Flüssigkeit durch eine vierte Komponente (204, 212) der zweiten Einrichtung (103) und/oder ein Etikettieren des Behälters durch eine fünfte Komponente (206, 216) der zweiten Einrichtung (103) und/oder ein Verschließen des Behälters durch eine sechste Komponente (205, 211) der zweiten Einrichtung (103) umfasst.

15. Verfahren nach Anspruch 14, wobei zum Verschließen des Behälters eine Behälteröffnung mit einem ersten Deckel aus ausgehärtetem Fasern umfassenden Material verschlossen wird und anschließend zum Versiegeln der Behälteröffnung ein zweiter Deckel aus noch nicht ausgehärtetem Fasern umfassenden Material mittels eines Presswerkzeugs auf den ersten Deckel gepresst wird.
